# EUROPEAN PATENT APPLICATION

(11) **EP 4 530 465 A1**
(43) Date of publication of application: **02.04.2025**
(21) Application number: 24824376.8
(22) Date of filing: 14.08.2024
(51) Int. Cl.: F03G 3/00

(54) **POWER GENERATION FACILITY**

(30) Priority: 14.08.2023 JP 2023132001
(71) Applicant: FOTORADA Corporation, Sagamihara-shi, Kanagawa 252-0143 (JP)
(72) Inventor: NUMAZAWA Eiji, Sagamihara-shi Kanagawa 2520143 (JP)
(74) Representative: Berggren Oy
(86) International application number: PCT/JP2024/029012
(87) International publication number: WO 2025/037633

(57) **Abstract**

The present invention aims to provide a power generating unit of high energy efficiency, and the power generating unit comprises a traveling unit 1, a traveling path 2, and a conveying device 3, wherein the traveling body comprises a power generating mechanism converting kinetic energy during traveling into electric energy, wherein the conveying device comprises a first driving rotor 31, a second driving rotor 32, and an operating rotor 33 operating in linkage with the first and second driving rotors, as well as a traveling body mounting section 211 on which the traveling body can be mounted on and which is connected to the operating rotor to move up and down in accordance with linked operations of the driving rotors and the operating rotor, and a weight 36 applying load to the driving rotors. When conveying, the weight is connected to the first driving rotor to rotate the first driving rotor and the operating rotor through rotational driving force by the weight of the weight in order to move the traveling body mounting section up with the traveling body being mounted thereon. When making the traveling body travel, the weight is connected to the second driving rotor to rotate the second driving rotor through the own weight of the traveling body mounting section to move the traveling body mounting section down.

## Description

### [Technical Field]

The present invention relates to a power generating unit.

### [Background Art]

There is a need for energy-efficient power generating units.

Patent Literature 1 discloses a power generating unit wherein a wind turbine rotatable upon receiving traveling wind is mounted onto a traveling body, and the traveling body is made to run on a rail of a roller coaster to generate power by rotating the wind turbine upon receiving traveling wind or by operating a power generator connected with wheel shafts, whereupon the power is extracted via the rail to store electricity.

### [Citation List]

### [Patent Literature]

### [PTL 1]

Patent No. 5051676 Publication

### [Summary of the Invention]

### [Technical Problem]

However, in the above power generating unit, since the traveling body is lifted by a belt conveyer while making the traveling body run on the rail in order to move the traveling body from the lowest position to a starting position located at a higher position, amount of power is required to activate the belt conveyor so that there is room for improvement in terms of energy consumption.

**In** view of this fact, the present invention aims to provide a power generating unit of high energy efficiency as a whole by eliminating consumption of power for moving the traveling body to the starting point.

### [Solution to Problem]

The invention as claimed in Claim 1 is a power generating unit, comprising a traveling body, a traveling path having a starting point and an end point set lower than the starting point and configured to enable the traveling body to travel from the starting point to the end point through gravity, and a conveying device conveying the traveling body, after traveling along the traveling path and reaching the end point, vertically from the end point to the starting point,
wherein the traveling body comprises a power generating mechanism configured to convert kinetic energy acquired during traveling either directly or indirectly into electric energy, wherein the conveying device comprises a first driving rotor, a second driving rotor, and an operating rotor operating in linkage with the first driving rotor and the second driving rotor, and also comprises a traveling body mounting section onto which the traveling body can be mounted and which is connected to the operating rotor to move up from the end point to the starting point or down from the starting point to the end point in accordance with linked operations of the first driving rotor as well as the second driving rotor and the operating rotor, and a weight applying load to the first driving rotor and the second driving rotor, wherein when conveying the traveling body to the starting point, the weight is connected to the first driving rotor to rotate the first driving rotor and the operating rotor through rotational driving force based on the weight of the weight in order to move the traveling body mounting section up with the traveling body being mounted thereon, while when making the traveling body travel, the weight is connected to the second driving rotor to rotate the second driving rotor through the own weight of the traveling body mounting section to move the traveling body mounting section down.

**In** the invention as claimed in Claim 2, the first driving rotor is a large diameter gear and the second driving rotor is a small diameter gear having a diameter smaller than that of the large diameter gear, and the operating rotor is a medium diameter gear engaging with the large diameter gear and the small diameter gear and having a diameter smaller than that of the large diameter gear and larger than that of the small diameter gear.

**In** the invention as claimed in Claim 3, the power generating unit further comprises a transmission gear interposed between the large diameter gear as well as the small diameter gear and the medium diameter gear to engage with the large diameter gear as well as the small diameter gear and the medium diameter gear.

**In** the invention as claimed in Claim 4, the first driving rotor and the second driving rotor are respectively provided on different rotating shafts.

**In** the invention as claimed in Claim 5, the first driving rotor and the second driving rotor are respectively provided on the same rotating shaft.

**In** the invention as claimed in Claim 6, the first driving rotor is a movable pulley, the operating rotor is a fixed pulley provided to be linkable to the movable pulley via a cord-like body, and the second driving rotor is a fixed pulley provided to be rotatable with respect to the operating rotor.

**In** the invention as claimed in Claim 7, the power generating unit further comprises a movable section configured to be operable to replace the weight between the first driving rotor and the second driving rotor, and a control section controlling actions of the movable section in accordance with positions of the traveling body.

In the invention as claimed in Claim 8, the conveying device further comprises a guide section disposed between the end point and the starting point in order to guide movements of the traveling body mounting section between the end point and the starting point, and the traveling body mounting section has an inclination angle enabling the traveling body to start free traveling in a state placed at the starting point.

In the invention as claimed in Claim 9, the traveling path is divided into a plurality of sections of different inclination angles with respect to a horizontal direction, and the traveling body can travel in each of the plurality of sections at a constant speed or at a predetermined speed.

In the invention as claimed in Claim 10, the traveling path is configured of a traveling rail the traveling body travels on and a power transmitting rail capable of outputting electricity generated by the power generating mechanism to the exterior or a conductive traveling rail, and the power generating mechanism comprises an output terminal configured to be connectable to and detachable from the power transmitting rail or the conductive traveling rail and is configured to enable extraction of electric energy via the traveling rail after conversion by the power generating mechanism.

In the invention as claimed in Claim 11, the conveying device further comprises a cord-like body which one end is attached to the first driving rotor and the second driving rotor in a windable manner while the other end is attached to a length adjusting member with a changeable length, respectively, and the weight is connectable to the corresponding first driving rotor as well as the second driving rotor via the length adjusting member.

In the invention as claimed in Claim 12, the length adjusting member has different dimensions in the longitudinal and transverse directions and has a closed shape, and its length is changeable by changing directions with respect to a direction of extension of the cable-like body.

### [Advantageous Effects of the Invention]

According to the invention as claimed in Claim 1, the traveling body is made to run along the traveling path, and power is generated by converting kinetic energy the traveling body acquires during traveling into electric energy by means of the power generating mechanism. After traveling, the traveling body that has reached the end point is returned to the starting point by means of the conveying device so that power generation can be restarted.

Here, since it is possible to increase a moment applied to the operating rotor by utilizing the action of leverage between the first driving rotor and the operating rotor and to move the traveling body up by means of the weight of the weight in a state the traveling body is mounted on the traveling body mounting section, consumption of power obtained by power generation and input of other external energies can be eliminated.

On the other hand, the traveling body mounting section at the starting point can be moved down to the end point by replacing the weight from the first driving rotor to the second driving rotor. Since it is possible to maintain a state in which an appropriate moment acts on the operating rotor by the action of leverage via the second driving rotor and the operating rotor, the traveling body mounting section can be moved down at a safe speed and moved to the end point.

**In** this manner, even with a relatively simple configuration using a plurality of rotors, it is possible to eliminate power consumption when moving the traveling body from the end point to the starting point, and to provide a power generating unit of higher energy efficiency as a whole.

According to the invention as claimed in Claim 2, by configuring the conveying device using a plurality of gears of respectively different diameters, it is possible to simplify the configuration.

According to the invention as claimed in Claim 3, it is possible to align the directions of rotation of the driving gears (large diameter gear, small diameter gear) and the operating gear (medium diameter gear), to secure a distance between an engaging section the gears mesh with each other and an attaching section of the weight to the gears, and to restrict situations in which operations are interfered.

According to the invention as claimed in Claim 4, it is possible to easily form an engaged relationship between the first driving rotor and the second driving rotor.

According to the invention as claimed in Claim 5, it is possible to reduce the space occupied by the conveying device to promote further simplification of the configuration.

According to the invention as claimed in Claim 6, it is possible to simplify the configuration by using a plurality of pulleys (movable pulley and fixed pulleys) to configure the conveying device.

According to the invention as claimed in Claim 7, it is possible to automatically replace the weight between the first driving rotor and the second driving rotor without human intervention so that power generation can be continued without requiring special staffing.

According to the invention as claimed in Claim 8, movements of the traveling body mounting section from the end point to the starting point as well as from the starting point to the end point can be guided by the guide section so that the traveling body mounting section can be moved between the end point and the starting point in a smooth and stable manner.

Further, it is possible to further improve the efficiency of the entire system since it is possible to start free traveling of the traveling body utilizing the inclination angle of the traveling body mounting device at the starting point, thus requiring no special configurations for biasing the traveling body.

According to the invention as claimed in Claim 9, by dividing the traveling path in a plurality of sections of different inclination angles with respect to the horizontal direction and enabling the traveling body to travel in each of the plurality of sections at a constant speed or at a predetermined speed, it is possible to actively control the electric energy that can be obtained by the power generating mechanism on a traveling path of a fixed length and to realize stable power generation and power supply by the power generating unit.

According to the invention as claimed in Claim 10, the traveling path is configured of a traveling rail the traveling body travels on and a power transmitting rail capable of outputting electricity generated by the power generating mechanism to the exterior or a conductive traveling rail, and the power generating mechanism is comprises an output terminal configured to be connectable to and detachable from the power transmitting rail or the conductive traveling rail and is configured to enable extraction of electric energy via the traveling rail after conversion by the power generating mechanism. Accordingly, especially in case of a configuration in which the traveling path is formed by the conductive traveling rail and the output terminal of the power generating mechanism is connectable to and detachable from the traveling rail to extract the electric energy obtained by the power generating mechanism via the traveling rail, it is possible to extract electric energy from the traveling body without requiring provision of other power transmitting rails than the traveling rail to thereby improve convenience while simplifying the configuration.

According to the invention as claimed in Claim 11, by enabling the weight to be connected to the first driving rotor and the second driving rotor via the length adjusting member, it is possible to easily replace the weight between the first and the second driving rotors.

According to the invention as claimed in Claim 12, by changing the direction of the length adjusting member having different dimensions in the longitudinal and transverse directions, it is possible to change the length of the length adjusting member and thus to easily adjust the length of the cord-like body.

### [Brief Description of Drawings]

[Fig. 1]

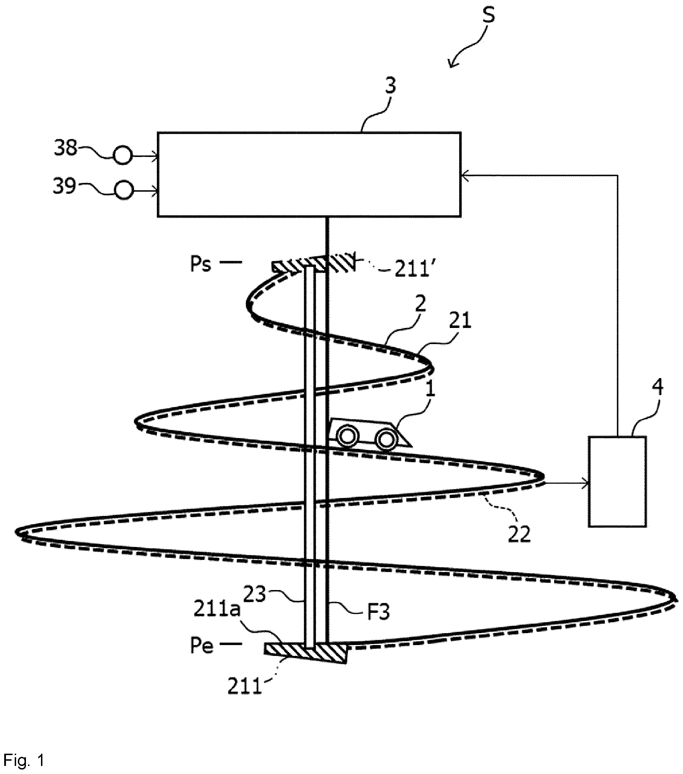

   Fig. 1 is a view of the overall configuration of a power generating unit according to one embodiment of the present invention.
[Fig. 2]

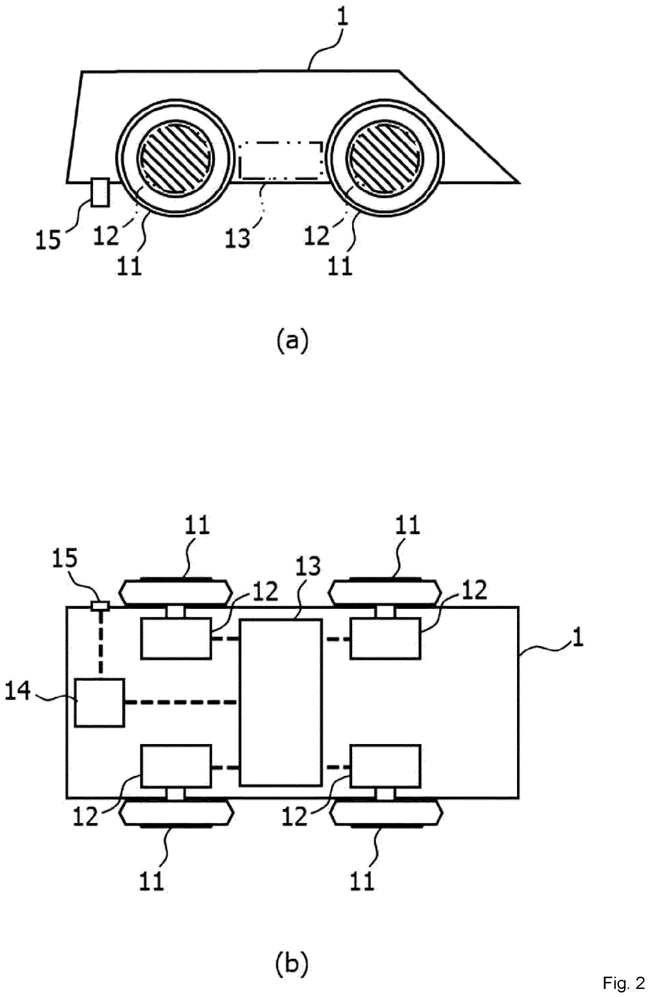

   Fig. 2 is a view of the configuration of a traveling body according to the above embodiment.
[Fig. 3]

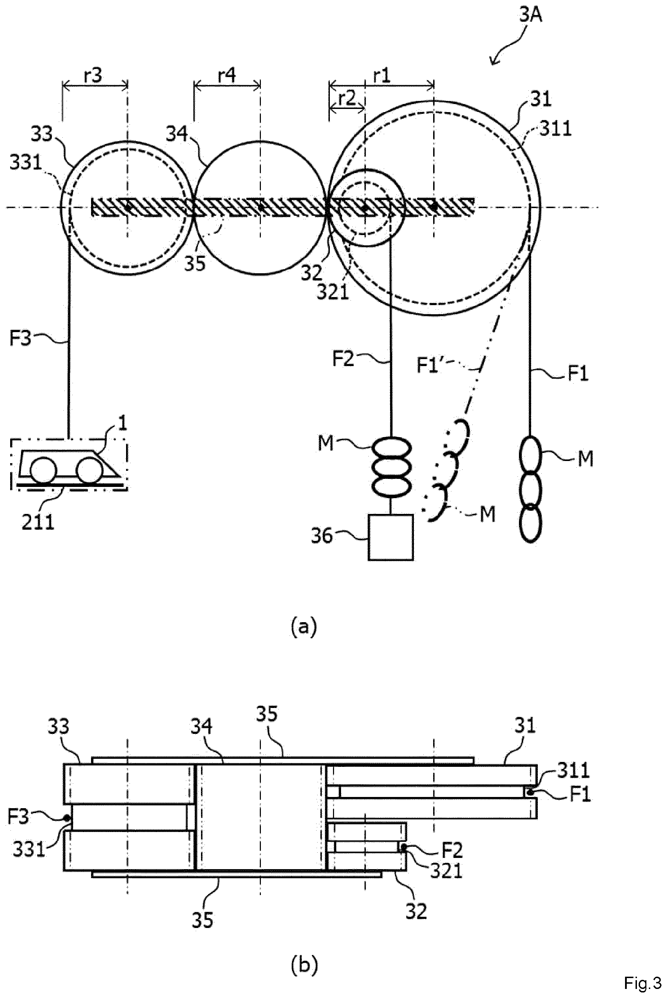

   Fig. 3 is a view of the configuration of a conveying device according to the above embodiment.
[Fig. 4]

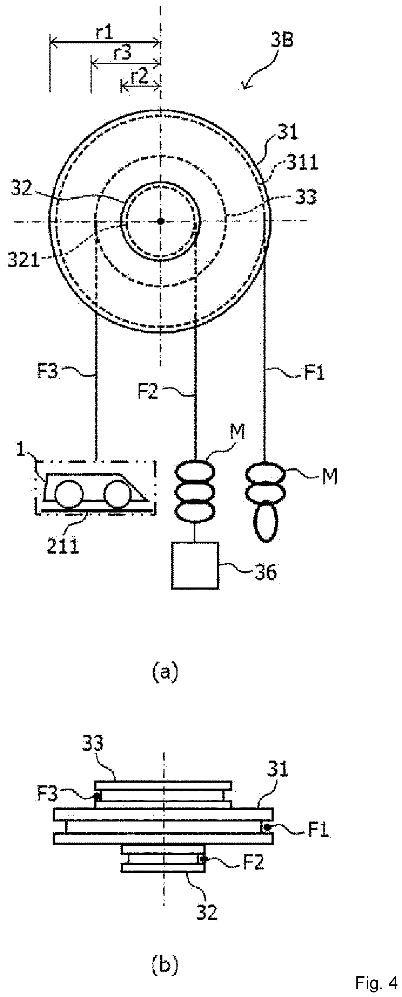

   Fig. 4 is a view of the configuration of a conveying device according to another embodiment of the present invention.
[Fig. 5]

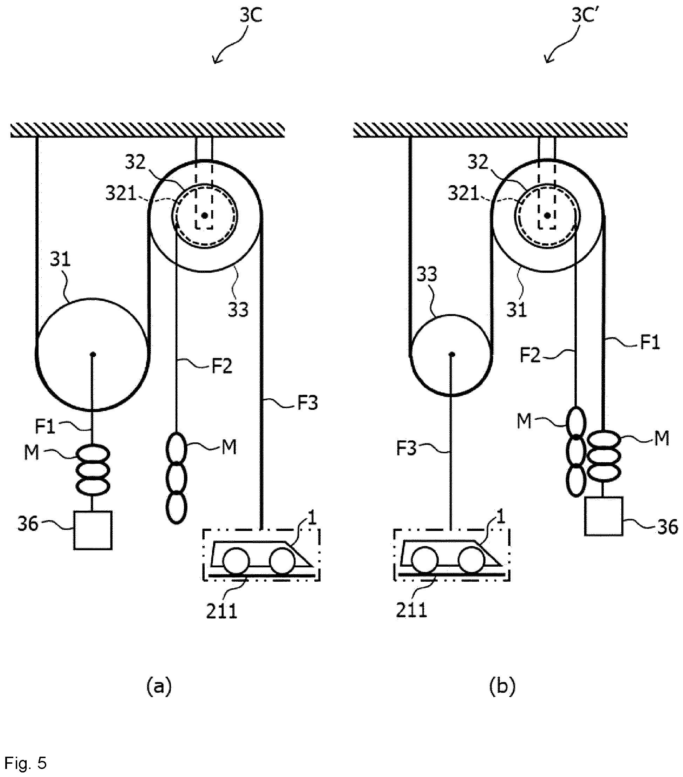

   Fig. 5 is a view of the configuration of a conveying device according to still another embodiment of the present invention.
[Fig. 6]

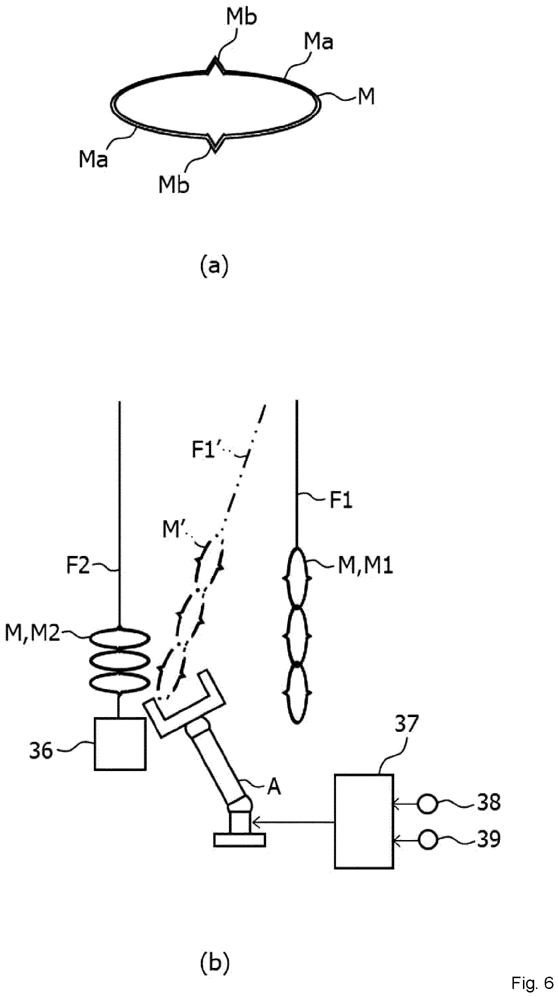

   Fig. 6 is a view of the configuration and for explaining operations of a length adjusting member.

### [Description of Embodiments]

Embodiments of the present invention will now be explained with reference to the accompanying drawings.

As shown in Fig. 1, a power generating unit S according to one embodiment of the present invention comprises a traveling body 1, a traveling path 2 and a conveying device 3. The power generating unit S generates power by making the traveling body 1 travel along the traveling path 2 through gravity and by converting kinetic power the traveling body 1 acquires while traveling into electric energy, and outputs the obtained electric energy (that is, power).

As shown in Fig. 2, the traveling body 1 comprises a pair of wheels 11 at the front and rear, respectively, and a power generator 12 which rotating shaft is connected to central shafts of the wheels 11 (that is, the wheel shafts).

It is possible to drive the power generator 12 through rotating power of the wheels 11 to generate power. The traveling body 1 further comprises a secondary battery 13 and an output device 14, and it is possible to store generated power in the secondary battery 13 or to output the power to the exterior via the output device 14. The traveling body 1 comprises an output terminal 15 for external output.

It is also possible to temporally store kinetic energy of the traveling body 1 in an energy storing means and to drive the power generator 12 using energy stored in this means. The energy storing means can be embodied, for example, by means of a spring. Therefore, in such a case, the power generator 12 is driven by winding the spring by means of the wheel shafts during traveling and by releasing the spring after the winding is completed.

The traveling path 2 is configured by a traveling rail 21 extending vertically in a spiral manner, wherein a starting point Ps is set at the upper end of the traveling rail 21 and an end point Pe is set at the lower end, respectively. That is, the end point Pe is located lower than the starting point Ps, and the traveling body 1 can travel on the traveling rail 21 from the starting point Ps to the end point Pe through gravity.

The traveling path 2 is formed in that its horizonal diameter, that is, turning radius, increases from the starting point Ps to the end point Pe, and its angle formed with respect to the horizontal direction, that is, the inclination angle of the traveling rail 21, reduces. With this arrangement, the traveling path 2 has a conical contour shape as a whole. Due to changes in the inclination angle, the traveling body 1 can travel with greater acceleration the closer the traveling body is to the starting point Ps.

The traveling path 2 is formed with a braking section close to the end position Pe, and the braking section can apply braking force to the traveling body 1 to stimulate deceleration of the traveling body 1. For example, the braking section may be formed as a rail section converging towards the center while decreasing in horizontal diameter. The traveling body 1 decelerates through energy consumption due to the change in direction towards the center and the friction exerted on the wheels 11 by the braking section.

**In** addition to the above, the traveling path 2 comprises a power transmitting rail 22 provided in parallel with the traveling rail 21. The traveling body 1 can output generated power to the exterior since the output terminal 15 contacts the power transmitting rail 22. Power output to the power transmitting rail 22 can be stored in an external power storage device 4. Power stored in the external power storage device 4 can be used to operate the conveying device 3.

The conveying device 3 conveys the traveling body 1 after traveling and reaching the end point Pe from the end point Pe to the starting point Ps. The conveying device 3 comprises two driving rotors, that is, a first driving rotor 31 and a second driving rotor 32, an operating rotor operable, that is, rotatable in linkage with the first and second driving rotors 31, 32, a traveling body mounting section 211, and a weight 36.

The traveling body mounting section 211 is configured in that the traveling body 1 can be mounted thereon to vertically move the traveling body 1 between the end point Pe and the starting point Ps. **In** this embodiment, the traveling body mounting section 211 is configured to be separable from the remaining sections as an end section of the traveling rail 21 close to the end point Pe, and movements of the traveling body mounting section 211 are guided by a guide rail 23 vertically connecting the end point Pe and the starting point Ps.

Regarding the traveling body mounting section 211, a mounting surface 211a onto which the traveling body 1 is mounted is in a horizontal state when at the end point Pe while the mounting surface 211a is inclining downward in the traveling direction when at the starting point Ps (traveling body mounting section 211'). This inclination allows the traveling body 1 to start free running through gravity from the starting point Ps without requiring power.

The weight 36 adds load to the first and second driving rotors 31, 32, and is replaceable between the two driving rotors 31, 32.

Fig. 3 show a conveying device 3A according to the present embodiment.

The conveying device 3A comprises a large diameter gear 31, a small diameter gear 32 and a medium diameter gear 33 of respectively different diameters as the first driving rotor, the second driving rotor, and the operating rotor. That is, the diameter r1 of the large diameter gear 31, the diameter r2 of the small diameter gear 32, and the diameter r3 of the medium diameter gear 33 satisfy a relationship of r2 < r3 < r1.

The conveying device 3A further comprises a transmission gear 34 interposed between the large diameter gear 31 as well as the small diameter gear 32 and the medium diameter gear 33, wherein the transmission gear 34 engages the large diameter gear 31 and the medium diameter gear 33 such that they can mutually transmit power and the small diameter gear 32 and the medium diameter gear 33 such that they can mutually transmit power.
The large diameter gear 31 and the small diameter gear 32 are provided at respectively different rotating shafts, that is, the large diameter gear 31 and the small diameter gear 32 can rotate in linkage with each other since their rotating shafts are not in a coaxial relationship and both engage with the transmission gear 34. The large diameter gear 31, the small diameter gear 32, the medium diameter gear 33, and the transmission gear 34 have their rotating shafts disposed at the same height and are connected by a supporting member 35 to be supported at a ground structure.

Depending on the relationship between the traveling body, the traveling body mounting section 211 and the weight of the weight 36, the gear 31, which is the first driving rotor, and the gear 33, which is the operating rotor, may have the same diameter (r1=r3), and the gear 32, which is the second driving rotor, and the gear 33 may have the same diameter (r2=r3) as well.

The medium diameter gear 33 comprises a cord-like body F3 joined to the gear 33 at one end, and the traveling body mounting section 211 is connected to the medium diameter gear 33 via the cord-like body F3. The medium diameter gear 33 can either wind the cord-like body F3 onto an outer circumference 331 or extend the wound cord-like body F3, depending on the rotating direction, wherein winding of the cord-like body F3 moves the traveling body mounting section 211 up while extending the cord-like body moves the traveling body mounting section down.

The large diameter gear 31 and the small diameter gear 32 comprise cord-like bodies F1, F2 joined to respective gears 31, 32 at one end, and the weight 36 can be connected to the corresponding gear 31, 32 via the cord-like bodies F1, F2. The cord-like bodies F1, F2 can be wound around outer circumferences 311, 321 of the corresponding gear 31, 32.

By attaching the weight 36 to the cord-like body F1, load is added to the large diameter gear 31, and rotational driving force based thereon rotates the medium diameter gear 33 in a direction of winding the cord-like body F3, enabling the traveling body mounting section 211 to move up. On the other hand, by attaching the weight 36 to the cord-like body F2, load is added to the small diameter gear 32 in a direction of moving the traveling body mounting section 211 up, similarly to the large diameter gear 31.

Replacing the weight 36 is performed by means of a movable arm section A. The movable arm section A replaces the weight 36 between the large diameter gear 31 and the small diameter gear 32, and it can also change the direction of a length adjusting member M in replacing the weight 36. As shown in Fig. 6(b), the movable arm section A operates in response to positions of the traveling body 1 based on instruction signals from a control section 37.

A first detector 38 outputting detection signals when the traveling body 1 is at the starting point Ps and a second detector 39 outputting detection signals when the traveling body 1 is at the end point Pe are provided, and the control section 37 inputs the detection signals from the first and second detectors 38, 39.

When the traveling body 1 finishes traveling and reaches the end portion Pe, the control section 37 detects this by the direction signal from the second detector 39 and attaches the weight 36 to the cord-like body F1 suspended from the large diameter gear 31 to be connected to the large diameter gear 31 in order to return the traveling body 1 to the starting point Ps. The large diameter gear 31 and the medium diameter gear 33 are rotated by the weight of the weight 36, and the traveling body mounting section 211 moves up with the traveling body 1 being mounted thereon.

When the traveling body 1 returns to the starting point Ps, the traveling body 1 starts free traveling under its own weight. At this time, the control section 37 operates in response to a detection signal from the first detector 38 to activate the movable arm section A and replaces the weight 36 to the cord-like body F2 suspending from the small diameter gear 32 to be connected to the small diameter gear 32. The small diameter gear 32 rotates in accordance with the rotation of the medium diameter gear 33 under the own weight of the traveling body mounting section 211 to move the traveling body mounting section 211 down.

**In** this manner, in the present embodiment, the traveling body 1 is made to travel along the traveling path 2, and kinetic energy the traveling body 1 acquires during traveling is converted into electric energy by means of the power generating mechanism to generate power. After traveling, the traveling body 1 having reached the end point Pe is returned to the starting point Ps by means of the conveying device 3 so that power generation can be resumed.

Here, it is possible to increase a moment applied to the medium diameter gear 33 by utilizing the action of leverage between the large diameter gear 31, which is the first driving rotor, and the medium diameter gear 33, which is the operating rotor, and to move the traveling body 1 up by the weight of the weight 36 in a state mounted on the traveling body mounting section 211. Accordingly, it is possible to eliminate consumption of power obtained by power generation or input of external energy.

On the other hand, the traveling body mounting section 211 at the starting point Ps can be moved down to the end position Pe by replacing the weight 36 from the large diameter gear 31 to the small diameter gear 32, which is the second driving rotor. Since it is possible to maintain an appropriate moment acting on the medium diameter gear 33 due to the action of leverage via the small diameter gear 32 and the medium diameter gear 33, the traveling body mounting section 211 can be moved down at a safe speed and moved to the end point Pe.

In this manner, even with a relatively simple configuration using a plurality of rotors 31, 32, 33, it is possible to eliminate consumption of power when moving the traveling body 1 from the end point Pe to the starting point Ps and to provide a power generating unit S of higher energy efficiency as a whole.

As shown in Fig. 4, a conveying device 3B according to another embodiment comprises a large diameter gear 31, a small diameter gear 32, and a medium diameter gear 33, and these three gears 31, 32, 33 are respectively provided on the same rotating shaft. That is, the gears 31, 32, 33 are rotatable coaxially and integrally with each other. Similarly to the conveying device 3A, a traveling body conveying section 211 is connected to the medium diameter gear 33 via a cord-like body F3, and a weight 36 is selectively connectable to the large diameter gear 31 and the small diameter gear 32 via cord-like bodies F1, F2.

Replacing of the weight 36 between the large diameter gear 31 and the small diameter gear 32 is performed by a movable arm section A. Similarly to Fig. 3, the large diameter gear 31, the small diameter gear 32, and the medium diameter gear 33 satisfy a relationship of r2 < r3 < r1, but it is possible to make the diameters of the gear 31, which is a first driving rotor, and the gear 33, which is an operating gear, to be identical (r1=r3), or the diameters of the gear 32, which is a second driving rotor, and the gear 33 to be identical (r2=r3).

As shown in Fig. 5, a conveying device 3C according to still another embodiment of the present invention includes a combination of a movable pulley and fixed pulleys.

In the example shown in Fig. 5(a), the conveying device 3C comprises a movable pulley 31 as a first driving rotor and fixed pulleys 32, 33 as a second driving rotor and an operating rotor. The movable pulley 31 and the fixed pulley 33 can be linked with each other via a cord-like body F3 bridged therebetween, and the fixed pulley 32 and the fixed pulley 33 are provided on the same rotating shaft so that they can rotate coaxially and integrally with each other. The fixed pulley 32, which is a driving rotor, has a smaller diameter than that of the fixed pulley 33, which is an operating rotor.

A traveling body mounting section 211 is connected to the fixed pulley 33 via a cord-like body F3, and a weight 36 is replaceable between a cord-like body F1 suspended from the center of the movable pulley 31 and a cord-like body F2 joined to the fixed pulley 32 to be windable around an outer circumference 321.

In the example shown in Fig. 5(b), a conveying device 3C' comprises fixed pulleys 31, 32 as a first driving rotor and a second driving rotor, and a movable pulley 33 as an operating rotor. The movable pulley 33 and the fixed pulley 31 can be linked with each other via the cord-like body F1 bridged therebetween, and the fixed pulley 31 and the fixed pulley 32 are provided on the same rotating shaft so that they can rotate coaxially and integrally with each other.

The fixed pulley 32, which is the second driving rotor, has a smaller diameter than the fixed pulley 31, which is the first driving rotor. A traveling body mounting section 211 is connected to the movable pulley 33 via a cord-like body F3 suspended from the center thereof, and a weight 36 is replaceable between a cord-like body F1 and a cord-like body F2 joined to the fixed pulley 32 to be windable around an outer circumference 321.

As shown in Fig. 5, a length adjusting member M is attached to end sections of the cord-like bodies F1, F2 leading to the first driving rotor 31 and the second driving rotor 32 to adjust the overall length of the cord-like bodies F1, F2, that is, the reachable range of the cord-like bodies F1, F2. It is possible to provide a plurality of identically shaped length adjusting members M to be connectable with each other either in the same or different directions.

As shown in Fig. 6(a), the length adjusting member M has different dimensions in the vertical and horizontal directions by having an elliptic shape as a whole and has a closed shape. More particularly, it has semi-elliptic sections Ma provided on each side in a major axis direction and engaging hook-like sections Mb provided on each side in a minor axis direction between the pair of semi-elliptic sections Ma.

As shown in Fig. 6(b), when a plurality of length adjusting members M are provided, the overall lengths of the cord-like bodies F1, F2 will be longest when the major axis direction of all length adjusting members M (M1) is set to be an extending direction of the cord-like bodies F1, F2 and shortest when the minor axis direction of all length adjusting members M (M2) is set to be the extending direction of the cord-like bodies F1, F2.

Regarding replacement of the weight 36, when there is a shortage in the length of the cord-like bodies F1, F2 moved closer to the weight 36, it is possible to eliminate the shortage in length by changing the direction of the length adjusting member M. Directions of the length adjusting member M can be stabilized by hooking the semi-elliptic sections Ma with each other, by hooking an engaging hook-like section Mb to a semi-elliptic section Ma, or by hooking the engaging hook-like sections Mb with each other.

In the above description, the angle the traveling path 2 forms with respect to the horizontal direction, that is, the inclination angle or gradient of the traveling rail 21 is formed to uniformly decrease from the starting point Ps to the end point Pe. The present invention is not limited to this, and the traveling path 2 may be divided into a plurality of sections of different inclination angles, and by suitably setting or adjusting the inclination angles for each of the sections, the traveling body 1 may be made to travel at a constant speed or at a predetermined speed in each of the plurality of sections.

For instance, an inclination angle for a first section continuing from the starting point Ps is set to be a relatively large first angle while an inclination angle for a second section following thereafter is set to be a second angle smaller than the first angle. Then, an inclination angle of a third section connecting the second section and the end point Pe is set to be a third angle even smaller than the second angle. Here, the first, second, and third angles may respectively be constant angles or angles falling within a certain range, wherein variations within each of the ranges are permitted.

With this arrangement, a large falling gradient is set for the traveling path 2 in the first section to stimulate acceleration of the traveling body 1, the falling gradient is reduced in the second section to make the traveling body 1 travel at a constant speed, and the falling gradient is further reduced to decelerate the traveling body 1 in a safe manner.

**In** this manner, by setting inclination angles of the traveling path 2 for each of the sections, power generating actions of the power generator 12 can be actively controlled over a fixed length of the traveling path 2, and it is possible to realize stable power generation and power supply by the power generating unit S through smooth and effective power generating actions of the power generator 12.

Moreover, in the above description, output of generated power is enabled by providing the power transmitting rail 22 in parallel with the traveling rail 21 in the traveling path 2 and by making the output terminal 15 of the traveling body 1 contact the power transmitting rail 22. The present invention is not limited to this, and it is also possible to suitable extract generated power of the power generator 12 via the traveling rail 21 by configuring the traveling rail 21 to be conductive and making the output terminal 15 to be connectable to and disconnectable from the traveling rail 21.

With this arrangement, generated power can be extracted as needed via the traveling rail 21 concurrently serving as the traveling path 2 without providing a power transmitting rail 22 in parallel with the traveling rail 21 so that it is possible to improve convenience while simplifying the configuration.

The power transmitting rail 22 may be provided in parallel to the traveling rail 21 or may also be eliminated. In case of arranging both of the traveling rail 21 and the power transmitting rail 22, it is also possible to make connecting points of the power generator 12 and the secondary battery 13 via the output device 14 to be switchable between the traveling rail 21 and the power transmitting rail 22 so as to switch output paths when extracting generated power.

For instance, the output terminal 15 is alternately made to contact the traveling rail 21 and the power transmitting rail 22 or a second output terminal contacting the traveling rail 21 is provided in addition to the output terminal (first output terminal) 15 contacting the power transmitting rail 22, wherein the output terminal which contact with the output device 14 is made effective is switched between the first and second output terminals.

It should be noted that suitable variations are possible within the scope of the gist of the present patent application, and the present invention is not limited to the specific configurations of the above embodiments.

### [Reference Sign List]

S: Power generating unit
1: Traveling body
11: Wheel
12: Power generator
13: Secondary battery
14: Output device
15: Output terminal
2: Traveling path
21: Traveling rail
211: Traveling body mounting section
22: Power transmitting rail
23: Guide section
3, 3A, 3B, 3C: Conveying device
31: First driving rotor, large diameter gear
32: Second driving rotor, small diameter gear
33: Operating rotor, medium diameter gear
34: Transmission gear
4: External power storage device
36: Weight
37: Control section
38: First detector
39: Second detector
F1, F2, F3: Cord-like body
M: Length adjusting member
A: Movable arm section

## Claims

1. A power generating unit, comprising
a traveling body,
a traveling path having a starting point and an end point set lower than the starting point and
configured to enable the traveling body to travel from the starting point to the end point through gravity, and
a conveying device conveying the traveling body, after traveling along the traveling path and
reaching the end point, vertically from the end point to the starting point,
wherein the traveling body comprises a power generating mechanism configured to convert kinetic energy acquired during traveling either directly or indirectly into electric energy,
wherein the conveying device comprises
a first driving rotor, a second driving rotor, and an operating rotor operating in linkage with the first driving rotor and the second driving rotor, and also comprises a traveling body mounting section onto which the traveling body can be mounted and which is connected to the operating rotor to be moveable up from the end point to the starting point or down from the starting point to the end point in accordance with linked operations of the first driving rotor as well as the second driving rotor and the operating rotor, and a weight applying load to the first driving rotor and the second driving rotor,
wherein when conveying the traveling body to the starting point, the weight is connected to the first driving rotor to rotate the first driving rotor and the operating rotor through rotational driving force based on the weight of the weight in order to move the traveling body mounting section up with the traveling body being mounted thereon,
while when making the traveling body travel, the weight is connected to the second driving rotor to rotate the second driving rotor through the own weight of the traveling body mounting section to move the traveling body mounting section down.

2. The power generating unit as claimed in Claim 1, wherein the first driving rotor is a large diameter gear and the second driving rotor is a small diameter gear having a diameter smaller than that of the large diameter gear, and the operating rotor is a medium diameter gear engaging with the large diameter gear and the small diameter gear and having a diameter smaller than that of the large diameter gear and larger than that of the small diameter gear.

3. The power generating unit as claimed in Claim 2, further comprising a transmission gear interposed between the large diameter gear as well as the small diameter gear and the medium diameter gear to engage with the large diameter gear as well as the small diameter gear and the medium diameter gear.

4. The power generating unit as claimed in Claim 1, wherein the first driving rotor and the second driving rotor are respectively provided on different rotating shafts.

5. The power generating unit as claimed in Claim 1, wherein the first driving rotor and the second driving rotor are respectively provided on the same rotating shaft.

6. The power generating unit as claimed in Claim 1, wherein the first driving rotor is a movable pulley, the operating rotor is a fixed pulley provided to be linkable to the movable pulley via a cord-like body, and the second driving rotor is a fixed pulley provided to be rotatable with respect to the operating rotor.

7. The power generating unit as claimed in any one of Claims 1 to 6, further comprising a movable section configured to be operable to replace the weight between the first driving rotor and the second driving rotor, and
a control section controlling actions of the movable section in accordance with positions of the traveling body.

8. The power generating unit as claimed in Claim 1, wherein the conveying device further comprises a guide section disposed between the end point and the starting point in order to guide movements of the traveling body mounting section between the end point and the starting point, and the traveling body mounting section has an inclination angle enabling the traveling body to start free traveling in a state placed at the starting point.

9. The power generating unit as claimed in any one of Claims 1 to 6, wherein the traveling path is divided into a plurality of sections of different inclination angles with respect to a horizontal direction, and
wherein the traveling body can travel in each of the plurality of sections at a constant speed or at a predetermined speed.

10. The power generating unit as claimed in Claim 1, wherein the traveling path is configured of a traveling rail the traveling body travels on and a power transmitting rail capable of outputting electricity generated by the power generating mechanism to the exterior or a conductive traveling rail,
wherein the power generating mechanism comprises an output terminal configured to be connectable to and detachable from the power transmitting rail or the conductive traveling rail,
and is configured to enable extraction of electric energy via the traveling rail after conversion by the power generating mechanism.

11. The power generating unit as claimed in any one of Claim 1 or Claim 3, wherein the conveying device further comprises a cord-like body which one end is attached to the first driving rotor and
the second driving rotor in a windable manner while the other end is attached to a length adjusting member with a changeable length, respectively, and
wherein the weight is connectable to the corresponding first driving rotor as well as the second driving rotor via the length adjusting member.

12. The power generating unit as claimed in Claim 11, wherein the length adjusting member has different dimensions in the longitudinal and transverse directions and has a closed shape, and its length is changeable by changing directions with respect to a direction of extension of the cable-like body.
